# EUROPÄISCHE PATENTANMELDUNG

(11) **EP 2 623 682 A1**
(43) Veröffentlichungstag der Anmeldung: **07.08.2013**
(21) Anmeldenummer: 12000764.6
(22) Anmeldetag: 06.02.2012
(51) Int. Cl.: E04C 2/12, A47B 96/20, B32B 21/13

(54) **Element zur Konstruktion einer Wand oder Decke**

(71) Anmelder: De Monte, Florian, 8010 Graz (AT)
(72) Erfinder: De Monte, Florian, 8010 Graz (AT)
(74) Vertreter: Wetzel, Philipp

(57) **Zusammenfassung**

Die Erfindung betrifft ein Element zur Konstruktion einer Wand oder Decke mit einer aus wenigstens zwei Schichten aufgebauten Brettsperrholzplatte mit wenigstens einer ersten Brettlage und mit wenigstens einer kreuzweise darauf angeordneten zweiten Brettlage, wobei die einzelnen Lagen mit einer Breitenverklebung miteinander verbunden sind. Aufgabe der Erfindung ist es, ein Element zur Wand- oder Deckenkonstruktion aus einem Brettsperrholz bereit zu stellen, das auf der einen Seite die notwendigen Brandschutzerfordemisse auf einfache Weise bereit stellt, gleichzeitig hinreichende Oberflächenerfordernisse und auch eine einfache Konstruktion als solches ohne aufwendige Nachbehandlungsmaßnahmen ermöglicht. Gelöst wird diese Aufgabe erfindungsgemäß dadurch, dass auf wenigstens einer Seite der Brettsperrholzplatte eine Platte aus einem Holzfaser- und/oder Holzspanwerkstoff angeordnet ist.

## Beschreibung

Die Erfindung betrifft ein Element zur Konstruktion einer Wand oder Decke mit einer aus wenigstens zwei Schichten aufgebauten Brettsperrholzplatte mit wenigstens einer ersten Brettlage und mit wenigstens einer kreuzweise darauf angeordneten zweiten Brettlage, wobei die einzelnen Lagen mit einer Flächenverklebung miteinander verbunden sind.

Brettsperrholz besteht üblicherweise aus drei bis sieben kreuzweise miteinander verklebten Brettlagen, die bevorzugt aus Nadelholz hergestellt sind. Bei der Herstellung der einzelnen Bretter wird bevorzugt Seitenware der Hölzer verwendet. Um eine hinreichende Länge zu erzeugen, sind die Einzelbretter der Länge nach mit Keilzinken kraftschlüssig verbunden. Mit solchen Brettsperrholzelementen lassen sich Gebäude in Holzmassivbauweise errichten.

Hergestellt werden solche Brettsperrholzplatten entweder durch das nebeneinander Anordnen von einzelnen Brettern zu einer Lage, die dann unter Druck auf die nächste darunter angeordnete Lage mit Klebstoff verpresst werden. Zusätzlich ist es möglich, die einzelnen Brettlagen untereinander über die sogenannte Schmalseitenverklebung miteinander zu verbinden.

Bei der Errichtung von Gebäuden ist neben der Erfüllung der statischen Anforderungen heutzutage die sogenannte Winddichtigkeit auf der einen Seite und auf der anderen Seite der Brandschutz relevant.

Generell ist es mit Brettsperrholz möglich, hinreichend Brandschutz in den Gebäuden zu erzeugen. In Bezug auf die Winddichtigkeit ist es so, dass bei Brettsperrholz, das keine Seitenrandverklebung aufweist, eine Winddichtigkeit nur durch eine massive Erhöhung der einzelnen Lagen oder durch das Aufbringen einer Folie erreichbar ist. Dieses wiederum ist nachteilig, weil heutzutage es erstrebenswert ist, Wand- und Deckenkonstruktionen diffusionsoffen bereit zu stellen, was durch das Aufbringen einer Folie verhindert wird. Gleichzeitig stellt das Aufbringen der Folie einen weiteren Arbeitsschritt bei der Herstellung des Gebäudes dar, wodurch höhere Kosten entstehen und sich die Bauzeit verlängert. Gleichzeitig ist es notwendig beim Einsatz von Folien, die Folien der einzelnen Abschnitte miteinander zu verbinden beispielsweise durch Verkleben oder Verschweißen, so dass hier eine potentielle Fehlerquelle vorhanden ist.

Zur Erzeug der Winddichtigkeit sind die Brettsperrholzplatten dahingehend verbessert worden, dass eine Schmalseitenverklebung eingeführt wurde. Durch das Bereitstellen einer Schmalseitenverklebung wird es jetzt möglich, bereits ab fünf Lagen in Ausnahmen bei hinreichender Qualitätsbereitstellung auch schon bei drei Lagen eine Winddichtigkeit des Brettsperrholzes zu erreichen. Allerdings ist es so, dass nicht alle Maschinen zur Herstellung von Brettsperrholz geeignet sind, diese Schmalseitenverklebung vorzunehmen. Es besteht dadurch unter Umständen Investitionsaufwand zur Umrüstung der Produktion und die Herstellung durch die Schmalseitenverklebung wird aufwendiger und damit teurer.

Ein weiterer Aspekt ist das Aussehen der fertigen Oberfläche der Wände bzw. Decken der Gebäude sowie die sich darauf ergebene Weiterverarbeitung der Wandelemente, um eine hinreichende Oberfläche zu erzeugen. Es hat sich ergeben, dass es durch das Bereitstellen der Schmalseitenverklebung prinzipiell möglich ist, fugenfreie Oberflächen an der äußeren Seite zu erzeugen, so dass sich die Qualität verbessert wird. Gleichzeitig tritt aber auch das Problem der Schwindrissbildung auf, so dass die hergestellte Oberfläche nach einer gewissen Zeit nach der Errichtung des Gebäudes durch die Schwindrissbildung wieder aufgerissen wird. Hier ist es dann notwendig, eine weitere Schicht beispielsweise in Form von Gipskartonplatten auf die Oberfläche aufzubringen, um dieses zu vermeiden. Dieses ist zeitaufwendig.

Aufgabe der Erfindung ist es, ein Element zur Wand- oder Deckenkonstruktion aus einem Brettsperrholz bereit zu stellen, das auf der einen Seite die notwendigen Brandschutzerfordernisse auf einfache Weise bereit stellt, gleichzeitig hinreichende Oberflächenerfordernisse und auch eine einfache Konstruktion als solches ohne aufwendige Nachbehandlungsmaßnahmen ermöglicht.

Gelöst wird diese Aufgabe erfindungsgemäß dadurch, dass auf wenigstens einer Seite der Brettsperrholzplatte eine Platte aus einem Holzfaser- und/oder Holzspanwerkstoff angeordnet ist.

Überraschenderweise hat sich gezeigt, dass eine solche Platte bereits bei zwei oder drei Schichten durch das Aufbringen einer entsprechenden Holzfaser- oder Holzspanplatte die notwendige Winddichtigkeit ohne das Vorsehen einer Schmalseitenverklebung erreicht wird. Gleichzeitig ist es durch die Zusammensetzung der Platte möglich, ohne in Bezug auf die Brettsperrholzplatte Einfluss zu nehmen, den hinreichenden Brandschutz bereit zu stellen. Gleichzeitig werden Fehlerquellen durch das fehlerhafte Verbinden der Folien oder auch aufwendige Nacharbeiten in Bezug auf das Anbringen von Gipskartonplatten oder dergleichen vor Ort auf der Baustelle vermieden.

Eine erfindungsgemäße Lehre sieht vor, dass die Platte mit der Brettsperrholzplatte verklebt ist. Vorteilhafterweise erfolgt das Verkleben bereits bei der Herstellung des Elements. Hierrunter wird beispielsweise das Verkleben der Platte auf die Brettsperrholzplatte in einem Werk bzw. in einem Produktionsschritt als auch das Verkleben der Platte beispielsweise bei der Herstellung des Wandelements oder Deckenelements unabhängig von der Herstellung des Brettsperrholzes verstanden. Hierdurch lassen sich aufwendige Nachkonstruktionsarbeiten vor Ort vermeiden.

Eine weitere vorteilhafte Lehre der Erfindung sieht vor, dass es sich bei der Platte aus einem Holzfaserwerkstoff um eine MDF- oder HDF-Platte handelt. Weiterhin ist vorteilhaft, dass es sich bei der Platte aus einem Holzfaserwerkstoff um eine Flachpressplatte handelt. Diese Platten aus einem der zuvor genannten Plattenwerkstoffe bieten die Möglichkeit, einen hinreichenden Brandschutzbereich bereit zu stellen, lassen sich einfach und punktgenau verarbeiten, insbesondere verkleben, und sind kostengünstig verfügbar.

Eine weitere Lehre der Erfindung sieht vor, dass das Elemente diffusionsoffen ist.

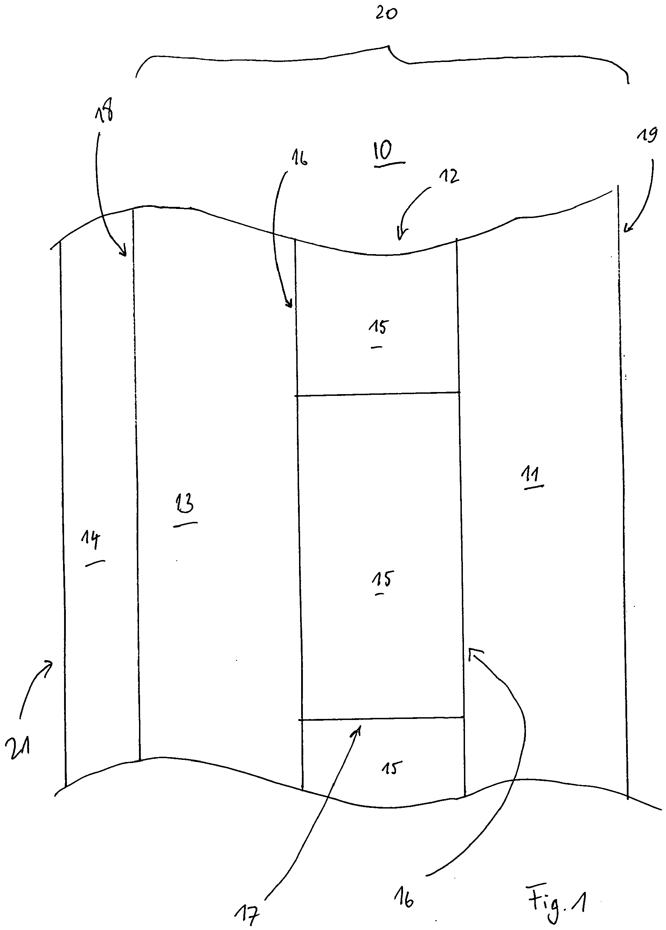

Nachfolgend wird die Erfindung anhand eines Ausführungsbeispiels in Verbindung mit einer Zeichnung näher erläutert. Dabei zeigt
- Fig. 1: eine Seitenansicht eines erfindungsgemäßen Elements.

Fig. 1 zeigt eine Seitenansicht eines erfindungsgemäßen Elements 10. Das Element 10 weist ein Brettsperrholz 20 auf, das hier dreilagig dargestellt ist. Alternativ können auch zwei, fünf, sieben oder mehr Lagen zur Anwendung kommen. Auch ist es möglich, beispielswelse bei sieben Lagen die Außenlagen zu verdoppeln.

Das Brettsperrholz 20 setzt sich zusammen aus einer ersten Längslage 11, einer in Kreuzlage angeordnete Querlage 12 und einer zweiten Längslage 13. Als Winkel der Kreuzlage kommen 45 bis 90° in Frage. Hier ist ein 90°-Winkel vorgesehen. Die jeweiligen Lagen 11, 12, 13 sind dabei aus Brettern 15 zusammengesetzt. Entlang der Verbindungsfuge 16 der einzelnen Lagen 11, 12, 13 sind diese Lagen miteinander verklebt. Die Schmalseiten 17 liegen in diesem Ausführungsbeispiel unverklebt vor. Es ist allerdings auch vorstellbar, diese verklebt auszuführen.

Auf der Oberfläche 18 der zweiten Längslage 13 ist eine Platt 14 angeordnet, bei der es sich beispielsweise um eine MDF-Platte handelt. Diese Platte 14 wird bereits bei der Herstellung der Brettsperrholzplatte 20 im Herstellwerk direkt in einem oder in einem gesonderten Arbeitsschrift auf die Brettsperrholzplatte 20 aufgebracht. Dieses kann wie in Fig. 1 dargestellt einseitig auf der Oberfläche 18 erfolgen. Zusätzlich oder alternativ kann dieses auch auf der anderen Oberfläche 19 vorgenommen werden.

Solche Elemente 10 lassen sich auf besonders einfache Weise für die Konstruktion einer Außen- oder Innenwand, einer Decke oder eines Bodens verwenden. Die äußere Oberfläche 21 der MDF-Platte 14 ist dabei so ausgeführt, dass sie eine hinreichende Güte aufweist, dass ein weiterer Behandlungsschritt nicht notwendig ist und als nächster Arbeitsschritt nur noch das Aufbringen der gewünschten Farbe zur Herstellung der fertigen Wand oder Decke notwendig ist. Auf diese Weise sind massive Kosteneinsparrungen beim Bauen möglich, weil mehrere Arbeitsschritte, wie beispielsweise das nachträgliche Aufbringen von Gipskartonplatten verbunden mit deren Weiterbearbeitung Spachteln, Schleifen, ggf. Vlies aufbringen, entfallen können. Weiterhin ist es möglich, vor dem Anbringen der Platte 14 auf das Brettsperrholz 20, beispielsweise bei der Errichtung einer Wandkonstruktion für die Fertigbauweise, in die Brettsperrholzlage Kabelkanäle oder dergleichen bereits einzubringen, die dann anschließend durch die Platte 14 abgedeckt werden.

### Bezugszelchenliste:

- 10: Element
- 11: erste Längslage
- 12: Querlage
- 13: zweite Längslage
- 14: Platte
- 15: Brett
- 16: Längsfüge
- 17: Schmalseite
- 18: Oberfläche
- 19: Oberfläche
- 20: Brettsperrholz
- 21: Oberfläche

## Patentansprüche

1. Element zur Konstruktion einer Wand oder Decke mit einer aus wenigstens zwei Schichten aufgebauten Brettsperrholzplatte mit wenigstens einer ersten Brettlage und mit wenigstens einer kreuzweise darauf angeordneten zweiten Brettlage, wobei die einzelnen Lagen mit einer Flächenverklebung miteinander verbunden sind, **dadurch gekennzeichnet, dass** auf wenigstens einer Seite der Brettsperrholzplatte eine Platte aus einem Holzfaser- und/oder Holzspanwerkstoff angeordnet ist.

2. Element nach Anspruch 1, **dadurch gekennzeichnet, dass** die Platte auf die Brettspreeholzplatte aufgeklebt ist.

3. Element nach Anspruch 1 oder 2, **dadurch gekennzeichnet, dass** das Anordnen der Platte beim Herstellen des Elements erfolgt.

4. Element nach einem der Ansprüche 1 bis 3, **dadurch gekennzeichnet, dass** es sich bei der Platte aus einem Holzfaserwerkstoff um eine MDF- oder HDF-Platte handelt.

5. Element nach einem der Ansprüche 1 bis 4, **dadurch gekennzeichnet, dass** es sich bei der Platte aus einem Holzspanwerkstoff um eine Flachpressplatte handelt.

6. Element nach einem der Ansprüche 1 bis 3, **dadurch gekennzeichnet, dass** das Element diffusionsoffen ist.

7. Bauwerk mit einer Außenwand mit einem Element nach einem der Ansprüche 1 bis 6.

8. Bauwerk mit einer Innenwand mit einem Element nach einem der Ansprüche 1 bis 6, wobei das Element der Innenwand bevorzugt auf beiden Seiten eine Platte aus dem Holzfaser- und/oder Holzspanwerkstoff angeordnet ist.

9. Bauwerk mit einer Decke mit einem Element nach einem der Ansprüche 1 bis 6.
